# EUROPEAN PATENT APPLICATION

(11) **EP 4 663 919 A1**
(43) Date of publication of application: **17.12.2025**
(21) Application number: 25180440.7
(22) Date of filing: 03.06.2025
(51) Int. Cl.: F02C 7/20, F02K 1/72, B64D 29/08

(54) **THRUST REVERSER MOUNTING ASSEMBLY**

(30) Priority: 12.06.2024 US 202418741088
(71) Applicant: The Boeing Company, Arlington, VA 22202 (US)
(72) Inventor: CHHEAN, Chhadanun, Arlington, 22202 (US); DANG, Van, Arlington, 22202 (US)
(74) Representative: Boult Wade Tennant LLP

(57) **Abstract**

A mounting assembly to support a thrust reverser that is mounted to an engine mount of an aircraft. The mounting assembly includes a support assembly configured to connect to the engine mount of the aircraft with the support assembly having a first lateral side and a second lateral side. A first arm is connected to the first lateral side of the support assembly and is configured to connect to a first section of the thrust reverser. A second arm is connected to the second lateral side of the support assembly and configured to connect to a second section of the thrust reverser. The first arm and the second arm are pivotally connected to the support assembly to support the first section and the second section of the thrust reverser at different angular positions.

## Description

### TECHNOLOGICAL FIELD

The present disclosure relates generally to the field of aircraft and, more specifically, to a mounting assembly that supports the thrust reverser of an engine.

### BACKGROUND

Many aircraft engines are equipped with thrust reversers. The thrust reversers are configured to be in a stowed position to enable the thrust of the engine to propel the aircraft in a forward direction. The thrust reversers are also configured to be in a deployed position to divert the thrust to act against the forward travel of the aircraft. Thrust reversers are normally used to slow down an aircraft during landing. The thrust reversers use the engines thrust to slow the aircraft thus helping to reduce wear on the brakes and enabling shorter landing distances for an aircraft.

The thrust reversers are mounted to the aircraft and extend around a portion or entirety of an engine core of the engine. During certain times such as maintenance work, the thrust reversers are positioned to allow access to the engine core. In one example, the thrust reversers are opened to allow the engine core to be removed from the aircraft. During these times, the thrust reversers in an open position and remain connected to the aircraft. However, the thrust reversers can be damaged when in an open position.

The thrust reversers include one or more seals. In one example, the seals are positioned at joints where different sections of the thrust reversers are connected to the wing. The seals can become damaged if the thrust reversers are in a closed position and the weight of the thrust reversers compresses the seals against the wings. In one example, the seals are fire seals. In the event of a fire in the engine core, the fire seals keep the fire contained within the immediate area. In some examples, the seals are configured to prevent oxygen from reaching the area of the fire thus preventing the fire from propagating. If these seals become damaged, they may not properly function to contain and/or suppress a fire.

The aircraft may need to be towed to various positions when the engine core is removed and the thrust reversers are still attached to the wings. For example, the aircraft may need to be towed to a maintenance area that is away from an active runway. The towing of the aircraft in this condition can cause the thrust reversers to bounce or otherwise move causing excessive forces to be applied to the thrust reversers. These forces can cause damage to the thrust reverses and/or seals when the sections are not adequately supported in the open position.

### SUMMARY

One example is directed to a mounting assembly to support a thrust reverser that is mounted to an engine mount of an aircraft. The mounting assembly comprises a support assembly configured to connect to the engine mount of the aircraft with the support assembly comprising a first lateral side and a second lateral side. A first arm is connected to the first lateral side of the support assembly and is configured to connect to a first section of the thrust reverser. A second arm is connected to the second lateral side of the support assembly and configured to connect to a second section of the thrust reverser. The first arm and the second arm are pivotally connected to the support assembly to support the first section and the second section of the thrust reverser at different angular positions.

In some examples, the support assembly may comprise a first base assembly and a second base assembly that are mounted adjacent to each other and with inner sides abutting together and with the first arm connected to the first base assembly and the second arm connected to the second base assembly.

In some examples, the first base assembly and the second base assembly may be aligned in a common plane.

In some examples, the first base assembly and the first arm may be mirror images of the second base assembly and the second arm.

In some examples, the mounting assembly may be configured to support the first section and the second section of the thrust reverser within an angular range of 6° to 47°.

In some examples, the support assembly, the first arm, and the second arm may be aligned in a common plane.

In some examples, the first arm may pivot about a first pivot axis and the second arm may pivot about a second pivot axis wherein the first pivot axis and the second pivot axis are spaced apart and parallel.

Another example is directed to a mounting assembly to support a thrust reverser that is mounted to an engine mount of an aircraft. The mounting assembly comprises a beam assembly configured to connect to the engine mount. A first base assembly and a second base assembly are each connected to the beam assembly with the first base assembly and the second base assembly aligned in a common plane. A first arm is pivotally connected to the first base assembly and comprises a first mount configured to connected to a first section of the thrust reverser. A second arm is pivotally connected to the second base assembly and comprises a second mount configured to connected to a second section of the thrust reverser. The first arm and the second arm pivot between first and second positions to selectively position the first section and the second section of the thrust reverser at different angular positions.

In some examples, each of the first base assembly and the second base assembly may comprise inner edges that abut together and outer edges that face outward in opposing lateral directions with the first arm connected at the outer edge of the first base assembly and the second arm is connected at the outer edge of the second base assembly.

In some examples, the beam assembly may comprise a beam, and clevis joints that extend outward from the beam and are configured to connect to the first base assembly and the second base assembly.

In some examples, the beam assembly, the first base assembly, the second base assembly, the first arm, and the second arm may be aligned in a common plane.

In some examples, the first arm and the second arm may be configured to pivot within a range of 6° - 47° relative to the respective pivot axes.

In some examples, a first block may be positioned between the first base assembly and the first arm to support the first arm in the first position and a second block is positioned between the second base assembly and the second arm to support the second arm in the first position.

Another example is directed to a method of supporting a thrust reverser on an engine mount of an aircraft. The method comprises: connecting a support assembly to the engine mount; connecting a first arm that extends from the support assembly to a first section of the thrust reverser; connecting a second arm that extends from the support assembly to a second section of the thrust reverser; positioning the first arm and the second arm at a first angular position relative to the support assembly and supporting the first section and the second section of the thrust reverser in a first position; and positioning the first arm and the second arm at a second angular position relative to the support assembly and supporting the first section and the second section of the thrust reverser in a second position.

In some examples, the method may further comprise pivoting the first arm and the second arm about pivot axes that extend through the support assembly and pivoting the first section and the second section of the thrust reverser about a thrust reverser axis with the pivot axes and the thrust reverser axis coincident.

In some examples, the method may further comprise connecting the first arm to a first Power Door Open System (PDOS) bracket on the first section and the second arm to a second PDOS bracket on the second section.

In some examples, the method may further comprise positioning the first arm and the second arm forward of a forward edge of the thrust reverser.

In some examples, the method may further comprise moving the first section and the second section of the thrust reverser through an angular range of 6° - 47°.

In some examples, supporting the first section and the second section in a first position may comprise positioning the first section and the second section in a fully open position.

In some examples, supporting the first section and the second section in a second position may comprise supporting the first section and the second section in a near closed position.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is an isometric view of an aircraft.
Figure 2 is a schematic top view of a thrust reverser in a first position to enable air to move through a fan duct and exit at an aft end.
Figure 3 is a schematic top view of the thrust reverser of Figure 2 in a deployed position to direct the air from the fan duct out through an opening.
Figure 4 schematic diagram of a thrust reverser that includes a first section and a second section.
Figure 5A is a schematic diagram of a thrust reverser in an open position.
Figure 5B is a schematic diagram of the thrust reverser of Figure 5A in a near closed position.
Figure 6 is an isometric view of a mounting assembly connected to a first section and a second section of a thrust reverser.
Figure 7A is a schematic diagram of a mounting assembly in a first angular orientation.
Figure 7B is a schematic diagram of the mounting assembly of Figure 7A in a second angular orientation.
Figure 8 is a schematic diagram of a thrust reverser in a near closed position.
Figure 9 is an isometric view of a mounting assembly supporting a thrust reverser in an open position.
Figure 10 is an isometric view of a mounting assembly supporting a thrust reverser in a near closed position.
Figure 11 is a flowchart diagram of a method of supporting a thrust reverser on a wing of an aircraft in the absence of an engine core.

### DETAILED DESCRIPTION

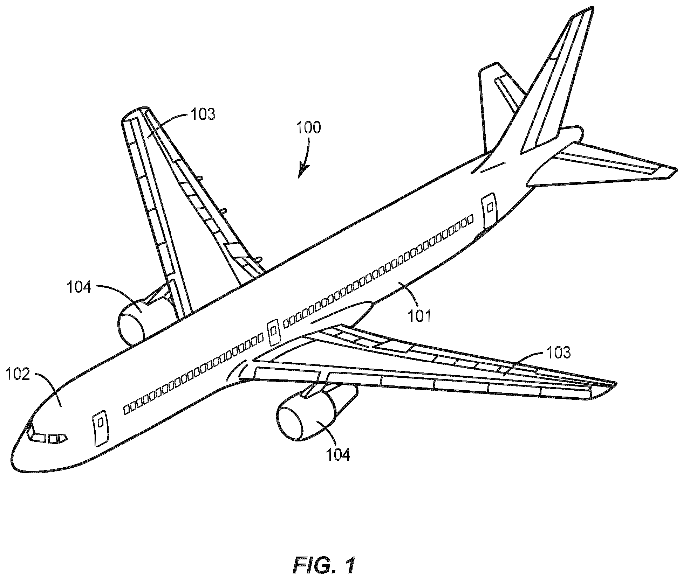

Figure 1 illustrates an aircraft 100 configured to transport passengers and/or cargo. The aircraft 100 generally includes a fuselage 101 with an interior space configured to accommodate passengers and/or cargo. The interior space of the fuselage 101 also includes a flight deck 102 with various controls to enable flight personnel to control the aircraft 100. Engines 104 are mounted on the wings 103 on opposing sides of the fuselage 101.

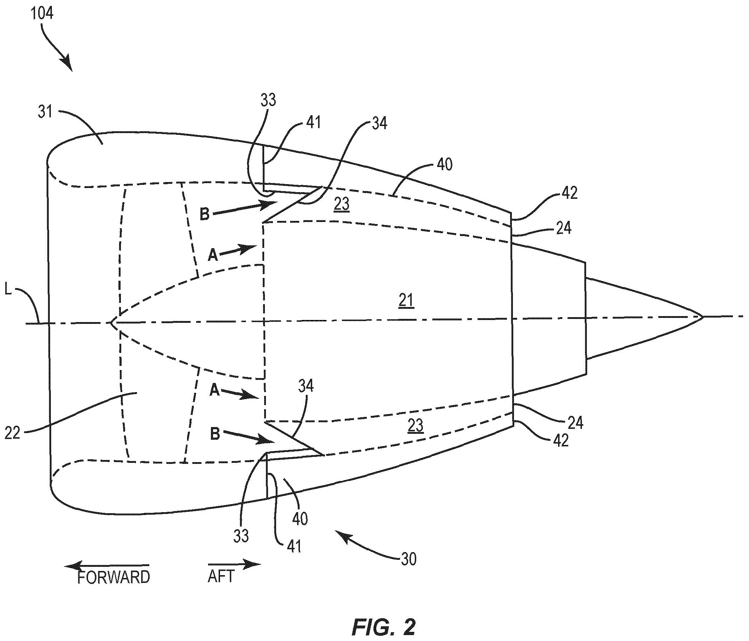

Figure 2 schematically illustrates an engine 104 with certain features that would be blocked from view being illustrated in broken lines. The engine 104 generally includes an engine core 21 and a nacelle 30. The engine core 21 can include a variety of different configurations, including but not limited to a gas turbine engine. In some examples the engine core 21 includes a fan 22 to draw air into the engine core 21. The nacelle 30 extends around and protects the engine core 21 and fan 22. The nacelle 30 includes a forward section 31 formed by one or more of an inlet cowl and fan cowl. The forward section 31 is fixed relative to the engine core 21. The nacelle 30 also includes a thrust reverser 40 with a sleeve that translates along a longitudinal axis L relative to the engine core 21.

The thrust reverser 40 is configured to move between a first position to enable air to move through a fan duct 23 and exit through a nozzle exit 24 and a deployed position to divert the air moving through the fan duct 23. Figure 2 illustrates the thrust reverser 40 in the first position such as during flight. Air that is drawn into the engine 104 and a first portion shown by arrow A is directed to the engine core 21 and a second portion shown by arrow B is directed to a fan duct 23. In the retracted position as shown in Figure 2, the thrust reverser 40 is positioned forward against the forward section 31. Blocker doors 33 are positioned to allow for airflow through the length of the fan duct 23 and out through the nozzle exit 24 at an aft end. One or more drag links 34 are connected to the blocker doors 33. The drag links 34 are in a first orientation that extends across the fan duct 23 and positions the blocker doors 33 in the open position.

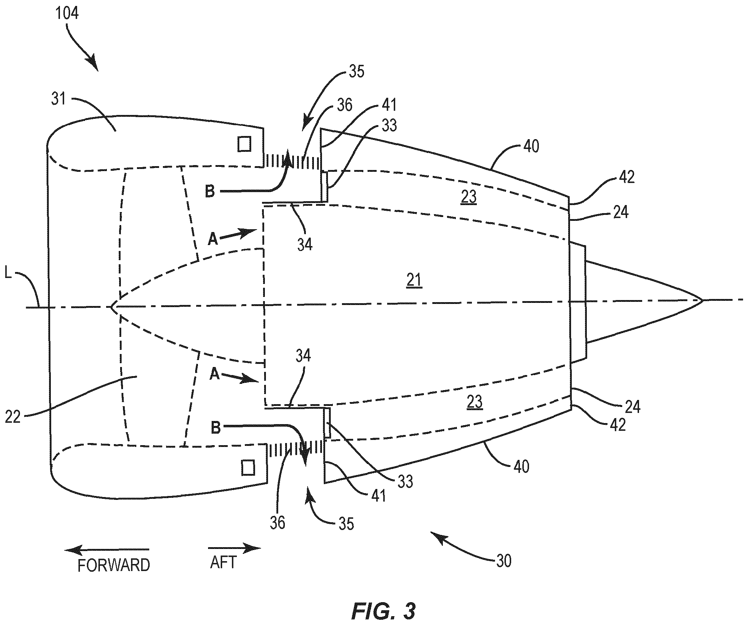

Figure 3 illustrates the thrust reverser 40 in a deployed position. The thrust reverser 40 is translated in an aft direction to form an opening 35 between the fixed forward section 31 and the thrust reverser 40. The drag links 34 are actuated to a second orientation to position the blocker doors 33 across the fan duct 23. This position forces the air that enters in the fan duct 23 through the opening 35. The air flows through cascade members 36 such as in the form of cascade vanes and exits as reverse efflux air flow.

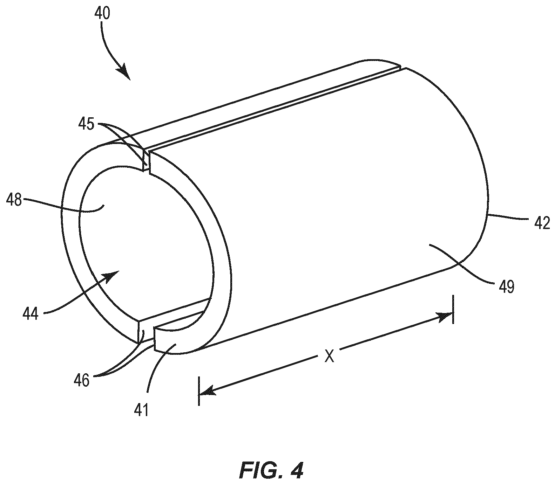

The thrust reverser 40 has a cylindrical or substantially cylindrical shape with a hollow interior sized to receive the engine core 21. As illustrated in Figure 4, the thrust reverser 40 includes a length X measured between a forward end 41 and an aft end 42. In some examples, the thrust reverser 40 extends completely around the engine core 21. In some other examples, the thrust reverser 40 extends partially around the engine core 21. The thrust reverser 40 is divided along the length X into sections including a first section 48 and a second section 49. Each section 48, 49 includes a semi-cylindrical shape with edges 45, 46 that extend along the length X. In some examples, the sections 48, 49 include the same shape and size. In some other examples, the sections 48, 49 include different shapes and/or sizes.

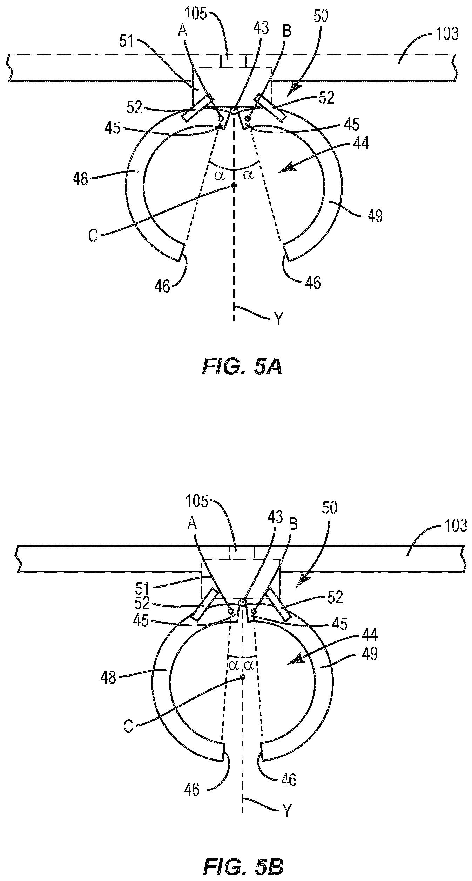

As illustrated in Figures 5A and 5B, a mounting assembly 50 connects the thrust reverser 40 to an engine mount 105 on the wing 103. The mounting assembly 50 provides support when the engine core 21 is removed from the interior space 44 of the thrust reverser 40. The mounting assembly 50 generally includes a support assembly 51 that connects to the engine mount 105 in the wing 103. Arms 52 extend from the support assembly 51 and are configured to connect to the first section 48 and second section 49 respectively. The arms 52 enable the first section 48 and second section 49 to move to different angular positions. The first section 48 is configured to pivot about a pivot axis A. The second section 49 is configured to pivot about a pivot axis B.

Figure 5A illustrates the sections 48, 49 in a first position. In some examples, the first position is a fully open position that is the extent of pivoting movement of the sections 48, 49. In some other examples, the first position is not a fully open position. The sections 48, 49 are positioned at angles α measured from a thrust reverser pivot axis A, B and the latch beam edge 46 to the center plane Y between the first section 48 and the second section 49 of the thrust reverser 40. The sections 48, 49 are pivoted outward about the respective pivot axes A, B near the hinge beam edges 45 with the opposing latch beam edges 46 spaced a greater distance apart. The extent of the pivoting can vary. In some examples, the angle α is within a range of between 40° - 50°. In one specific example, the angles α are 47.

Figure 5B illustrates the thrust reverser 40 in a second position. In some examples, the second position is a nearly closed position with the first section 48 and second section 49 pivoted such that the latch beam edges 46 are in proximity but still spaced apart. The mounting assembly 50 is configured to prevent the latch beam edges 46 from coming into contact. The angle α can vary with one specific example including an angle of 6°.

The mounting assembly 50 enables movement of the different sections 48, 49 and supports the sections 48, 49 at the different angular positions. In some examples as illustrated in Figures 5A and 5B, the sections 48, 49 are moved equal distances and positioned at corresponding angles. In some other examples, the sections 48, 49 are moved different amounts such that the two angles are different. In some examples as illustrated in Figures 5A and 5B, the sections 48, 49 are positioned symmetrically relative to the central plane Y. In some other examples, the thrust reverser 40 is aligned at a different rotational angle relative to the central plane Y. In some examples, the mounting assembly 50 enables pivoting movement of the first section 48 and second section 49 within an angular range of 6° to 47.

Overall, the mounting assembly 50 enables the sections 48, 49 to pivot through a range of movement between the first and second positions. The mounting assembly 50 supports the sections at the various angular positions. In some examples, the range of movement of each section is 40°. One specific range of motion for each of the sections 48, 49 is an angle α of 47 in the first position and 6° in the second position.

The mounting assembly 50 enables the movement and supports the sections 48, 49 when the engine core 21 is removed from the interior space 44. In some examples, the mounting assembly 50 supports the sections 48, 49 to prevent damage from occurring to the seal 43 that is positioned against one or more of the edges 45 and a pylon structure that includes the engine mount 105 and is positioned in front of the thrust reverser 40. In some examples, the seal 43 is a fire seal positioned between the edges 45 of the sections 48, 49.

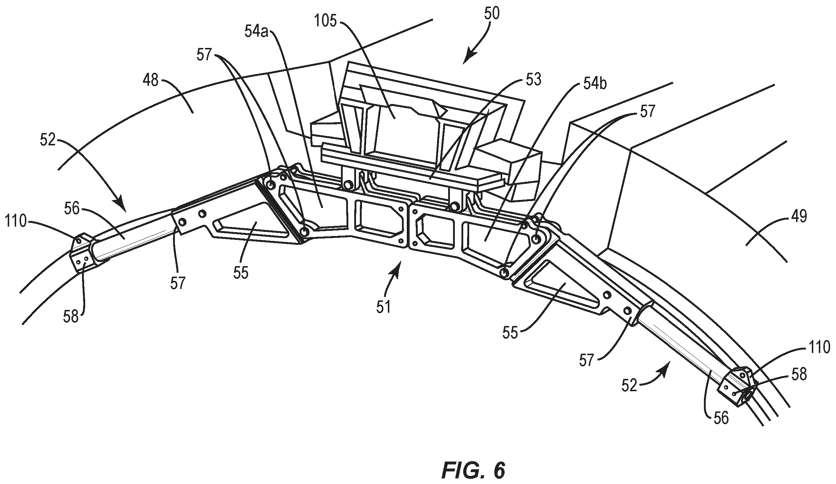

Figure 6 illustrates a mounting assembly 50 that includes the support assembly 51 and arms 52. The support assembly 51 includes a beam assembly 53 configured to connect to the engine mount 105. In some examples, the beam assembly 53 includes a beam and one or more clevis joints. The beam is configured to connect to the engine mount 105 and position the clevis joints outward below the wing. The support assembly 51 also includes a base assembly 54. The base assembly 54 is connected to the clevis joints of the beam assembly 53. In some examples, the base assembly 54 includes multiple plates that are connected together in an overlapping arrangement and secured together with fasteners.

The base assembly 54 can be formed in a single section or in multiple sections. In some examples, including the example of Figure 6, the base assembly 54 includes a first base assembly 54a and a second base assembly 54b. The assemblies 54a, 54b are positioned adjacent to each other and separately connect to the beam assembly 53. The assemblies 54a, 54b include inner edges that abut together. In some examples, the inner edges are aligned along a vertical center line of the thrust reverser 40. The contact between the different assemblies 54a, 54b along the inner edges provides additional strength. In some examples, the separate assemblies 54a, 54b are mirror images of each other.

The arms 52 are connected to the base assembly 54. The arms 52 include an elongated shape with a first end that connects to the base assembly 54 and a second end that connects to the thrust reverser 40. In some examples, the arms 52 include a single piece. In some other examples as illustrated in Figure 6, the arms 52 are formed by two or more separate pieces that are connected together. In some examples, including the example of Figure 6, the arms 52 include a support assembly 55 and an arm 56. Each support assembly 55 is connected at an outer edge of the base assembly 54 with fasteners. The fasteners secure the support assembly 55 to the base assembly 54 and also provide for positioning the support assembly 55 at different angular positions relative to the base assembly 54. Each support assembly 55 also includes a receptacle 57 on an opposing end that is sized to receive the arm 56.

Each of the arms 56 includes an elongated shape with a first section configured to be inserted in the receptacle 57. Fasteners extend through and connect the arm 56 in the receptacle 57. A mount 58 is positioned at the second end and is configured to engage with the thrust reverser 40. In some examples, the mount 58 is configured to connect to the Power Door Open System (PDOS) bracket 110 on the thrust reverser 40. The PDOS bracket 110 is positioned along the forward end 41 of the thrust reverser 40 and spaced away from the inner edges 45.

In some examples, the mounting assembly 50 is divided into two sections about the central axis Y of the thrust reverser 40. Each of the sections has the same shape and size and is positioned in an inverted configuration (i.e., a mirror image about the central axis Y). This configuration can facilitate manufacturing and use as the mounting assembly 50 has fewer overall parts.

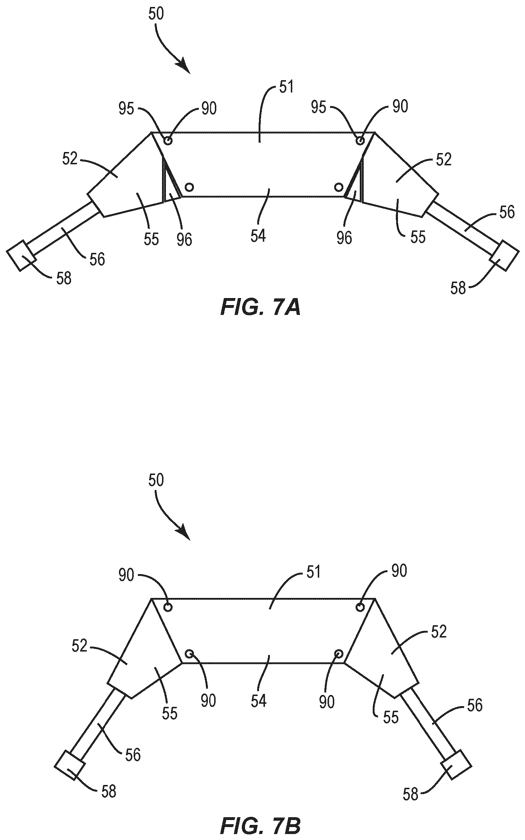

The mounting assembly 50 enables positioning the sections 48, 49 of the thrust reverser 40 at different angular positions. The angular positioning occurs between the base assembly 54 and the support assemblies 55. Figure 7A illustrates the arms 52 mounted to the support assembly 51 at a first position. The arms 52 are attached to the support assembly 51 at a pivot axis 95. In some examples, a fastener 90 extends through each of the support assembly 51 and arms 52 at the pivot axis 95. In some examples, the pivot axes 95 are parallel. Blocks 96 are positioned in the gaps between the support assembly 51 and the arms 52 to support the arms 52. Figure 7B illustrates the mounting assembly 50 at a second position. The arms 52 are pivoted inward relative to the support assembly 51 to close the sections of the thrust reverser. The arms 52 are connected with multiple fasteners 90 that are spaced apart along the junction.

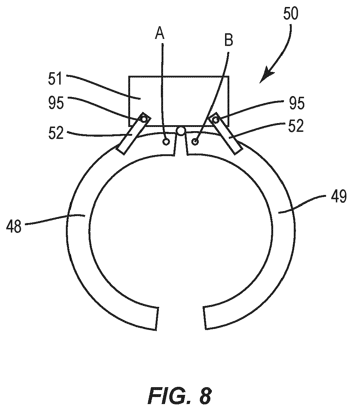

In some examples as illustrated in Figure 8, the sections 48, 49 of the thrust reverser 40 pivot about one or more axes. In some other examples, the sections 48, 49 are separate and pivot about separate axes. Further, the mounting assembly 50 enables the arms 52 to pivot relative to the support assembly 51 at axes at the pivot point 95 to move between the different angular positions. In some examples with multiple pivoting axes, the axes are coincident to enable pivoting movement of the sections 48, 49 without binding or otherwise preventing the pivoting movement between the different angular positions.

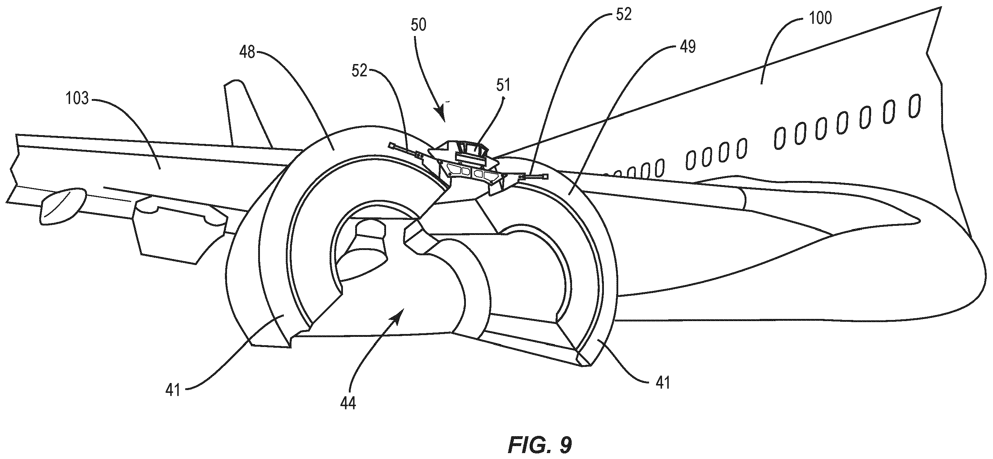

Figure 9 illustrates the mounting assembly 50 positioning the sections 48, 49 of the thrust reverser 40 in an open position. The mounting assembly 50 is mounted to the engine mount. In some examples, the open position enables the engine core removal/installation equipment (not illustrated) to be removed and/or installed onto the pylon. The arms 52 are pivoted outward and support the sections 48, 49 to remain pivoted open to provide access to the interior space 44.

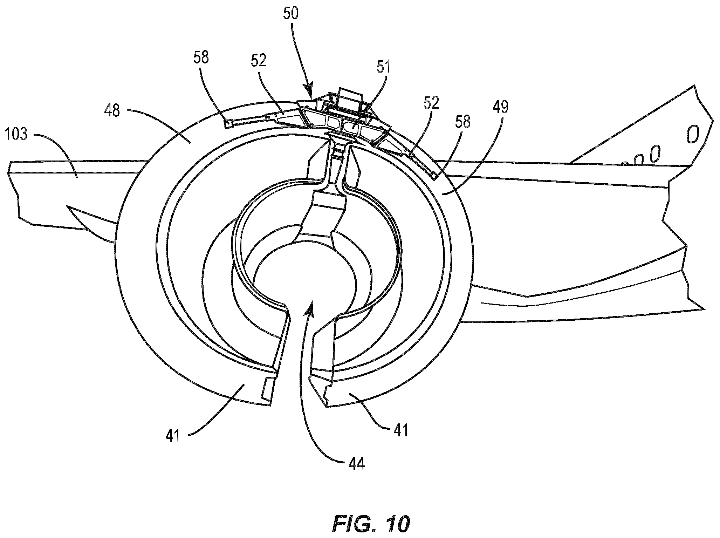

Figure 10 illustrates the mounting assembly 50 positioning the sections 48, 49 in a near closed position. In some examples, this positioning is maintained for extended periods of time prior to the engine core 21 being reinstalled in the aircraft 100. The mounting assembly 50 supports the sections 48, 49 and maintains the positioning. In some examples, the mounting assembly 50 supports the sections 48, 49 and prevents and/or reduces movement, such as when the aircraft is being towed. This support prevents the thrust reverser 40 from being damaged.

As illustrated in Figures 9 and 10, the mounting assembly 50 is positioned forward of the forward ends 41 of sections 48, 49 of the thrust reverser 40. This positioning facilitates attachment of the mounting assembly 50 and the transition between the open position and the near closed position. In some examples, the components of the mounting assembly 50 are aligned in a common plane that is vertically aligned when installed on the aircraft 100. The common vertical plane is positioned forward of the forward ends 41 of the sections 48, 49.

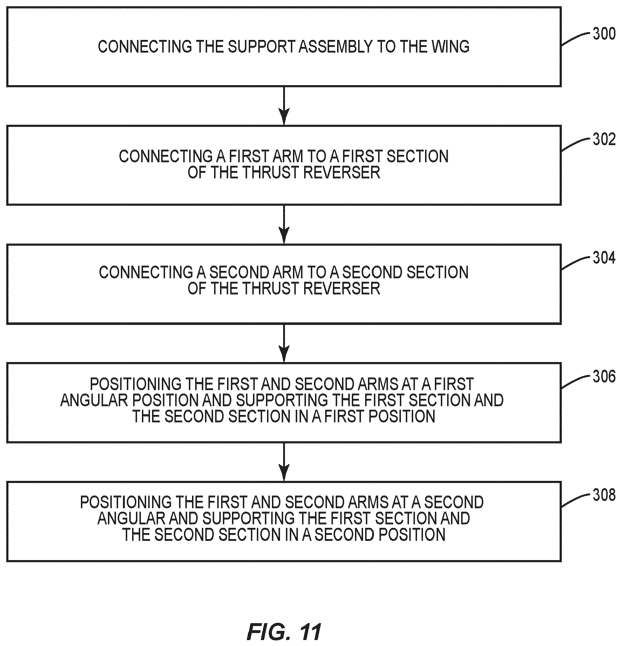

Figure 11 illustrates a method of supporting a thrust reverser 40 on a wing 103 of an aircraft 100. The method includes connecting a support assembly 51 to the wing 103 (block 300). A first arm 52 that extends from the support assembly 51 is connected to a first section 48 of the thrust reverser 40 (block 302). A second arm 52 that extends from the support assembly 51 is connected to a second section of the thrust reverser (block 304). The first arm 52 and the second arm 52 are positioned at a first angular position relative to the support assembly 51 to support the first section 48 and the second section 49 of the thrust reverser 40 in a first position (block 306). The first arm 52 and the second arm 52 are positioned at a second angular position relative to the support assembly 51 to support the first section 48 and the second section 49 in a second position (block 308). The first and second positions can be at various angular positions.

The mounting assembly 50 is attached to the engine mount 105 on the wing 103 when the aircraft 100 is on the ground. The mounting assembly 50 is then attached to the thrust reverser 40. The mounting assembly 50 is manipulated to position the sections 48, 49 of the thrust reverser 40 at the various angular positions as necessary to perform maintenance. The mounting assembly 50 is removed prior to installation of the core engine 21.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present disclosure may, of course, be carried out in other ways than those specifically set forth herein without departing from essential characteristics of the disclosure. The present examples are to be considered in all respects as illustrative and not restrictive, and all changes coming within the meaning of the appended claims are intended to be embraced therein.

The following clauses present further examples:
Clause 1. A mounting assembly to support a thrust reverser that is mounted to an engine mount of an aircraft, the mounting assembly comprising:
   a support assembly 51 configured to connect to the engine mount of the aircraft, the support assembly 51 comprising a first lateral side and a second lateral side;
   a first arm 52 connected to the first lateral side of the support assembly 51 and configured to connect to a first section of the thrust reverser;
   a second arm 52 connected to the second lateral side of the support assembly 51 and configured to connect to a second section of the thrust reverser; and
   wherein the first arm 52 and the second arm 52 are pivotally connected to the support assembly 51 to support the first section and the second section of the thrust reverser at different angular positions.
Clause 2. The mounting assembly of Clause 1, wherein the support assembly 51 comprising a first base assembly 54a and a second base assembly 54b that are mounted adjacent to each other and with inner sides abutting together and with the first arm 52 connected to the first base assembly 54a and the second arm 52 connected to the second base assembly 54b.
Clause 3. The mounting assembly of Clause 2, wherein the first base assembly 54a and the second base assembly 54b are aligned in a common plane.
Clause 4. The mounting assembly of Clause 2 or Clause 3, wherein the first base assembly 54a and the first arm 52 are mirror images of the second base assembly 54b and the second arm 52.
Clause 5. The mounting assembly of any preceding Clause, wherein the mounting assembly is configured to support the first section and the second section of the thrust reverser within an angular range of 6° to 47°.
Clause 6. The mounting assembly of any preceding Clause, wherein the support assembly 51, the first arm 52, and the second arm 52 are aligned in a common plane.
Clause 7. The mounting assembly of any preceding Clause, wherein the first arm 52 pivots about a first pivot axis and the second arm 52 pivots about a second pivot axis wherein the first pivot axis and the second pivot axis are spaced apart and parallel.
Clause 8. A mounting assembly to support a thrust reverser that is mounted to an engine mount of an aircraft, the mounting assembly comprising:
   a beam assembly 53 configured to connect to the engine mount;
   a first base assembly 54a and a second base assembly 54b each connected to the beam assembly 53, the first base assembly 54a and the second base assembly 54b aligned in a common plane;
   a first arm 52 pivotally connected to the first base assembly 54a and comprising a first mount 58 configured to connected to a first section of the thrust reverser;
   a second arm 52 pivotally connected to the second base assembly 54b and comprising a second mount 58 configured to connected to a second section of the thrust reverser; and
   wherein the first arm 52 and the second arm 52 pivot between first and second positions to selectively position the first section and the second section of the thrust reverser at different angular positions.
Clause 9. The mounting assembly of Clause 8, wherein each of the first base assembly 54a and the second base assembly 54b comprises inner edges that abut together and outer edges that face outward in opposing lateral directions with the first arm 52 connected at the outer edge of the first base assembly 54a and the second arm 52 is connected at the outer edge of the second base assembly 54b.
Clause 10. The mounting assembly of Clause 9, wherein the beam assembly 53 comprises:
   a beam; and
   clevis joints that extend outward from the beam and are configured to connect to the first base assembly 54a and the second base assembly 54b.
Clause 11. The mounting assembly of any of Clauses 8 - 10, wherein the beam assembly 53, the first base assembly 54a, the second base assembly 54b, the first arm 52, and the second arm 52 are aligned in a common plane.
Clause 12. The mounting assembly of any of Clauses 8 - 11, wherein the first arm 52 and the second arm 52 are configured to pivot within a range of 6° - 47° relative to respective pivot axes.
Clause 13. The mounting assembly of any of Clauses 8 - 12, further comprising a first block 96 positioned between the first base assembly 54a and the first arm 52 to support the first arm 52 in the first position and a second block 96 positioned between the second base assembly 54b and the second arm 52 to support the second arm 52 in the first position.
Clause 14. A method of supporting a thrust reverser on an engine mount of an aircraft, the method comprising:
   connecting a support assembly 51 to the engine mount;
   connecting a first arm 52 that extends from the support assembly 51 to a first section of the thrust reverser;
   connecting a second arm 52 that extends from the support assembly 51 to a second section of the thrust reverser;
   positioning the first arm 52 and the second arm 52 at a first angular position relative to the support assembly 51 and supporting the first section and the second section of the thrust reverser in a first position; and
   positioning the first arm 52 and the second arm 52 at a second angular position relative to the support assembly 51 and supporting the first section and the second section of the thrust reverser in a second position.
Clause 15. The method of Clause 14, further comprising pivoting the first arm 52 and the second arm 52 about pivot axes that extend through the support assembly 51 and pivoting the first section and the second section of the thrust reverser about a thrust reverser axis with the pivot axes and the thrust reverser axis being coincident.
Clause 16. The method of any of Clauses 14 - 15, further comprising connecting the first arm 52 to a first Power Door Open System (PDOS) bracket on the first section and the second arm 52 to a second PDOS bracket on the second section.
Clause 17. The method of any of Clauses 14 - 16, further comprising positioning the first arm 52 and the second arm 52 forward of a forward edge of the thrust reverser.
Clause 18. The method of any of Clauses 14 - 17, further comprising moving the first section and the second section of the thrust reverser through an angular range of 6° - 47°.
Clause 19. The method of any of Clauses 14 - 18, wherein supporting the first section 48 and the second section 49 in a first position comprises positioning the first section 48 and the second section 49 in a fully open position.
Clause 20. The method of any of Clauses 14 - 19, wherein supporting the first section 48 and the second section 49 in a second position comprises supporting the first section 48 and the second section 49 in a near closed position.
Clause 21. An aircraft (100) comprising:
   the mounting assembly of any of Clauses 1 - 13;
   an engine (104) comprising a thrust reverser (40); and
   an engine mount (105), wherein the mounting assembly (50) is mounted to the engine mount and is configured to support the thrust reverser.

## Claims

1. An apparatus comprising:
a thrust reverser (40); and
a mounting assembly (50) to support the thrust reverser, the mounting assembly comprising:
a support assembly (51) comprising a first lateral side and a second lateral side;
a first arm (52) connected to the first lateral side of the support assembly (51) and connected to a first section of the thrust reverser; and
a second arm (52) connected to the second lateral side of the support assembly (51) and connected to a second section of the thrust reverser;
wherein the first arm (52) and the second arm (52) are pivotally connected to the support assembly (51) to support the first section and the second section of the thrust reverser at different angular positions.

2. The apparatus of claim 1, wherein the support assembly (51) comprises a first base assembly (54a) and a second base assembly (54b) that are mounted adjacent to each other and with inner sides abutting together and with the first arm (52) connected to the first base assembly (54a) and the second arm (52) connected to the second base assembly (54b).

3. The apparatus of claim 2, wherein one or more of:
the first base assembly (54a) and the second base assembly (54b) are aligned in a common plane; and
the first base assembly (54a) and the first arm (52) are mirror images of the second base assembly (54b) and the second arm (52).

4. The apparatus of any preceding claim, wherein one or more of:
the support assembly (51), the first arm (52), and the second arm (52) are aligned in a common plane;
the first arm (52) pivots about a first pivot axis and the second arm (52) pivots about a second pivot axis wherein the first pivot axis and the second pivot axis are spaced apart and parallel; and
the mounting assembly is configured to support the first section and the second section of the thrust reverser within an angular range of 6° to 47°.

5. The apparatus of claim 1, wherein the support assembly (51) further comprises:
a beam assembly (53); and
a first base assembly (54a) and a second base assembly (54b) each connected to the beam assembly (53), the first base assembly (54a) and the second base assembly (54b) aligned in a common plane; and
wherein the first arm (52) is pivotally connected to the first base assembly (54a) and comprises a first mount (58) connected to the first section of the thrust reverser;
wherein the second arm (52) is pivotally connected to the second base assembly (54b) and comprises a second mount (58) connected to the second section of the thrust reverser; and
wherein the first arm (52) and the second arm (52) pivot between first and second positions to selectively position the first section and the second section of the thrust reverser at the different angular positions.

6. The apparatus of claim 5, wherein each of the first base assembly (54a) and the second base assembly (54b) comprises inner edges that abut together and outer edges that face outward in opposing lateral directions with the first arm (52) connected at the outer edge of the first base assembly (54a) and the second arm (52) is connected at the outer edge of the second base assembly (54b), and optionally,
wherein the beam assembly (53) comprises:
a beam; and
clevis joints that extend outward from the beam and connect to the first base assembly (54a) and the second base assembly (54b).

7. The apparatus of claim 5 or claim 6, wherein one or more of:
the beam assembly (53), the first base assembly (54a), the second base assembly (54b), the first arm (52), and the second arm (52) are aligned in a common plane; and
the first arm (52) and the second arm (52) are configured to pivot within a range of 6° - 47° relative to respective pivot axes.

8. The apparatus of any of claims 5 - 7, further comprising a first block (96) positioned between the first base assembly (54a) and the first arm (52) to support the first arm (52) in the first position and a second block (96) positioned between the second base assembly (54b) and the second arm (52) to support the second arm (52) in the first position.

9. An aircraft (100) comprising:
the apparatus of any preceding claim;
an engine (104) that includes the thrust reverser (40) of the apparatus; and
an engine mount (105), wherein the mounting assembly (50) of the apparatus is mounted to the engine mount.

10. A method of supporting a thrust reverser (40) on an engine mount (105) of an aircraft (100), the method comprising:
connecting a support assembly (51) to the engine mount;
connecting a first arm (52) that extends from the support assembly (51) to a first section (48) of the thrust reverser;
connecting a second arm (52) that extends from the support assembly (51) to a second section (49) of the thrust reverser;
positioning the first arm (52) and the second arm (52) at a first angular position relative to the support assembly (51) and supporting the first section and the second section of the thrust reverser in a first position; and
positioning the first arm (52) and the second arm (52) at a second angular position relative to the support assembly (51) and supporting the first section and the second section of the thrust reverser in a second position.

11. The method of claim 10, further comprising pivoting the first arm (52) and the second arm (52) about pivot axes that extend through the support assembly (51) and pivoting the first section and the second section of the thrust reverser about a thrust reverser axis with the pivot axes and the thrust reverser axis being coincident.

12. The method of claim 10 or claim 11, further comprising connecting the first arm (52) to a first Power Door Open System, PDOS, bracket on the first section (48) of the thrust reverser and the second arm (52) to a second PDOS bracket on the second section (49) of the thrust reverser.

13. The method of any of claims 10 - 12, further comprising positioning the first arm (52) and the second arm (52) forward of a forward edge of the thrust reverser.

14. The method of any of claims 10 - 13, further comprising moving the first section (48) of the thrust reverser and the second section (49) of the thrust reverser through an angular range of 6°- 47°.

15. The method of any of claims 10 - 14, wherein one or more of:
supporting the first section (48) and the second section (49) of the thrust reverser in the first position comprises positioning the first section (48) and the second section (49) of the thrust reverser in a fully open position; and
supporting the first section (48) and the second section (49) of the thrust reverser in the second position comprises supporting the first section (48) and the second section (49) of the thrust reverser in a near closed position.
